# FASCICULE DE BREVET EUROPEEN

(11) **EP 1 653 832 B1**
(45) Date de publication et mention de la délivrance du brevet: **08.10.2008**
(21) Numéro de dépôt: 04738124.9
(22) Date de dépôt: 03.08.2004
(51) Int. Cl.: A47J 31/40, A47J 31/06

(54) **DISPOSITIF POUR LA PREPARATION D UNE BOISSON A BASE DE CAFE**
VORRICHTUNG FÜR DIE ZUBEREITUNG EINES KAFFEEGETRÄNKS
DEVICE FOR THE PREPARATION OF A COFFEE-BASED DRINK

(30) Priorité: 05.08.2003 CH 135303
(43) Date de publication de la demande: 10.05.2006
(73) Titulaire: Gaillard, Jean-Paul, 1096 Cully (CH)
(72) Inventeur: MARILLER, Alain, CH-1092 Belmont (CH)
(74) Mandataire: Grosfillier, Philippe
(86) Numéro de dépôt international: PCT/CH2004/000484
(87) Numéro de publication internationale: WO 2005/011452

(56) Documents cités:
- EP-A- 1 247 480
- WO-A-02/058523
- US-B1- 6 182 554

## Description

### Domaine de l'invention

La présente invention se situe dans le domaine des dispositifs pour la préparation de boissons à base de café par extraction d'une dose de café moulu contenue dans une capsule.

### Etat de la technique

Des dispositifs fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau sous pression.

La capsule décrite dans le brevet CH 605 293 ou dans le brevet EP 0 242 556 B1 comporte une membrane dans sa partie inférieure. De l'eau sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

Dans le dispositif présenté dans le brevet EP 0 512 470 B1, en se bombant suite à l'introduction de l'eau dans la capsule, la membrane s'écrase et se perfore contre une surface qui comporte des éléments en relief.

D'autres dispositifs utilisant un mode de fonctionnement identique ou similaire à ceux précédemment décrits sont présentés dans les documents brevets suivants: EP 0 250 810 B1, EP 0 521 188 B1, EP 0 521 397 B1, EP 0 726 053 B1, EP 0 469 162 B1 et WO 92/07775.

On connaît également d'autres dispositifs où le mélange eau-café est d'abord réalisé dans la chambre qui contient la capsule, mais s'écoule seulement à partir du moment où la pression dans la chambre qui contient la capsule a atteint une valeur minimale prédéfinie. Voir notamment les demandes de brevet EP 0 726 053 A1, EP 0 622 039 A1 et EP 1 016 364 A2.

Dans tous les dispositifs cités plus haut, l'écoulement du mélange eau-café se déclenche à partir d'une pression déterminée, prédéfinie lors de la fabrication du dispositif.

La demande de brevet EP 1 247 480 A1 décrit un système permettant de contrôler la pression. Il est constitué d'un circuit hydraulique comprenant un ensemble de conduites, de valves et de chambres. En fonction de la pression choisie, certaines conduites sont désactivées et d'autres activées. De même, certaines chambres sont vidées et d'autres remplies. Ces modifications entraînent l'ouverture ou la fermeture des orifices d'écoulement.

La dose de café est contenue dans une chambre qui s'ouvre et se referme en fonction de la pression hydraulique régnant dans une chambre spécifique.

Le circuit comprend plusieurs valves dont une, sensible à la pression, qui fonctionne de manière à activer un sous-circuit de blocage de l'écoulement du mélange eau-café lorsque la pression de l'eau dans le circuit est trop base et, lorsque la pression est suffisante, de manière à activer un sous-circuit d'écoulement du mélange eau-café liquide.

Le dispositif précité est relativement complexe dans sa structure et son fonctionnement. En outre, il est adapté pour un type spécifique de doses de café et n'est pas destiné à des porte-capsules que l'on fixe ou retire manuellement du dispositif.

### Résumé de l'invention

La présente vise notamment à remédier aux problèmes précités.

A cet effet, elle concerne un dispositif pour la préparation d'une boisson à base de café par extraction d'une dose de café moulu contenue dans une capsule tel que défini dans la revendication 1.

Il convient de noter que le dispositif selon l'invention présente de nombreuses différences et avantages par rapport à l'état de la technique. La demande EP 1 247 480 A1, par exemple, comporte les différences et inconvénients suivants :
- fermeture hydraulique de la chambre qui retient la capsule,
- complexité de l'ensemble du dispositif (pluralité de valves et de lignes de conduite d'eau, etc...),
- disposition et fonctionnement de la valve sensible à la pression,
- absence d'organes de perforation de la caspule, mobiles par rapport au porte-capsule.

De préférence, le dispositif comporte des moyens qui permette à l'utilisateur de choisir la pression d'ouverture de la valve, donc de définir la pression d'extraction du café de la capsule.

La valve est sensible à la pression, p.ex. mécaniquement, ce qui permet de simplifier considérablement le dispositif.

Selon une variante de l'invention, les moyens hydrauliques comprennent un obturateur qui alternativement obture ou autorise l'écoulement d'un mélange eau-café à travers l'orifice d'écoulement.

L'obturateur peut se situer n'importe où entre la capsule et l'orifice d'écoulement. Selon un mode de réalisation, il se situe au-dessous du porte-capsule.

Bien évidemment, le dispositif peut contenir plusieurs obturateurs si plusieurs orifices doivent être obturés.

De préférence, on utilise avec cette variante des éléments de perforation, par ex. des dents, qui sont disposés sur le porte-capsule de manière à ce que la capsule soit perforée lors de son insertion dans le dispositif.

Selon une autre variante de l'invention, les moyens hydrauliques sont constitués d'au moins un organe de perforation qui, lorsqu'il est activé, perfore une capsule disposée sur le porte capsule et autorise de la sorte l'écoulement d'un mélange eau-café à travers l'orifice d'écoulement.

Avantageusement, le dispositif comprend plusieurs organes de perforation qui se déplacent entre une position de repos (càd lorsqu'il n'y a pas d'écoulement du mélange eau-café), située sous ou dans le porte-capsule, et une position active située au-dessus du porte-capsule. Ainsi, la capsule repose initialement sur une surface plane. Lorsque les moyens hydrauliques sont activés, les organes de perforation émergent de la surface plane et percent la capsule.

Selon une autre variante de l'invention, le dispositif peut être utilisé avec une capsule qui comporte déjà des orifices recouverts d'une fine membrane. Le porte-capsule comprend une membrane en silicone fixée sur un ressort qui obture initialement lesdits orifices mais qui les libère suite à l'application d'une force qui comprime le ressort.

Selon une autre variante de l'invention, le porte-capsule contient un orifice d'écoulement de diamètre relativement large, les bords de l'orifice comportant au moins un élément d'amorce dont la fonction consiste à déchirer la membrane d'une capsule qui se bombe. L'orifice d'écoulement est initialement fermé par un piston et s'ouvre ensuite par déplacement du piston vers le bas.

Il va sans dire que le dispositif selon l'invention peut être utilisé avec un très grand nombre de capsules différentes, qui comporte notamment une membrane qui se bombe ou ne se bombe pas suite à l'introduction d'eau dans la capsule.

De même, le dispositif selon l'invention, sans sa variante qui comprend des organes de perforation, peut utiliser des capsules avec des parois rigides, c'est-à-dire sans membrane flexible.

On relèvera également que les capsules utilisées peuvent être de formes diverses, p.ex. conique, cylindrique ou même cubique.

Quelques modes de réalisation de l'invention sont décrits ci-après au moyens des figures suivantes :
La figure 1 présente schématiquement une première variante de l'invention en mode de repos.
La figure 2 présente la variante de la figure 1 en mode actif.
La figure 3 présente schématiquement une deuxième variante de l'invention en mode de repos.
La figure 4 présente la variante de la figure 3 en mode actif.
La figure 5 montre une valve en position fermée.
La figure 6 montre la valve de la figure 5 en position ouverte.
La figure 7 montre une coupe frontale d'un mode de réalisation du dispositif selon l'invention en mode de repos.
La figure 8 montre une coupe frontale d'un mode de réalisation du dispositif selon l'invention en mode actif.

### Références numériques utilisées dans les figures :

1. Réservoir
2. Pompe
3. Conduite d'arrivée d'eau
4. Valve
5. Conduite de dérivation
6. Moyens hydrauliques d'activation
7. Porte-capsule
8. Capsule
9. Organe d'injection d'eau
10.Orifice de sortie
11. Raccord en Y
12. Obturateur
13. Elément perforant
14. Orifice d'écoulement
15. Corps de chauffe
16. Orifice d'entrée de valve
17. Orifice de sortie de valve
18.Zone de fermeture
19. Ressort
20. Réservoir flexible
21. Corps annulaire mobile
22. Bague de fixation
23. Support capsule
24. Plaque support pour éléments perforants
25. Piston obturateur

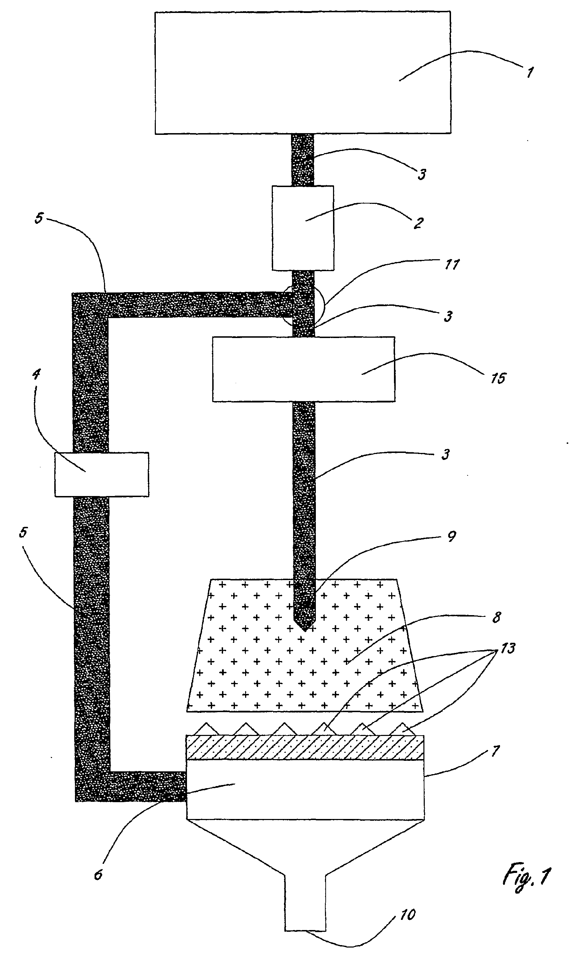

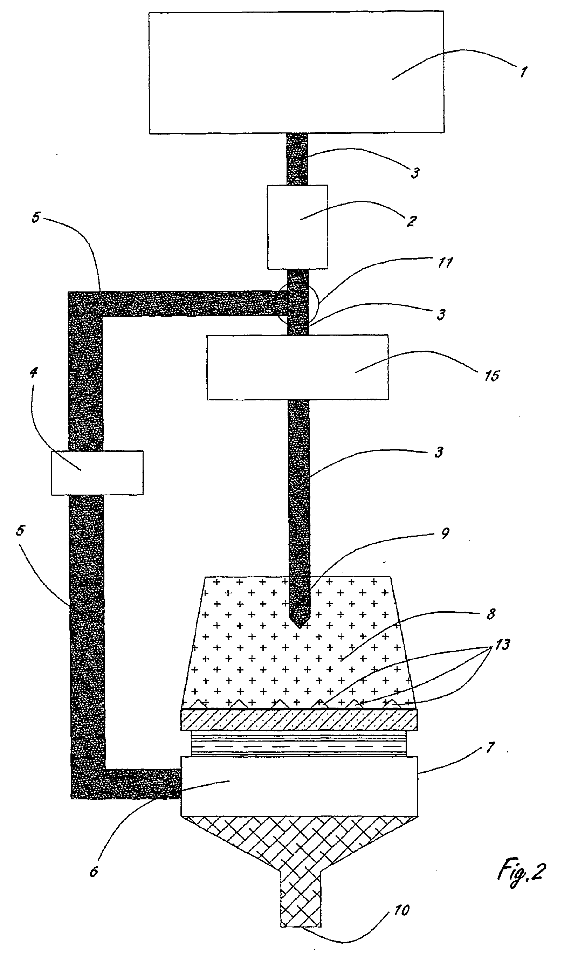

Le dispositif schématisé sur les figures 1 et 2 se compose d'une conduite d'arrivée d'eau **3** reliant successivement un réservoir **1**, une pompe **2**, un corps de chauffe 15 et un organe d'injection d'eau **9** présentant une extrémité suffisamment tranchante pour perforer une capsule **8** disposée sur un porte-capsule **7** dans le prolongement de la conduite d'arrivée d'eau **3.** Le porte-capsule **7** comporte dans sa partie inférieure un orifice de sortie **10**.

La partie supérieure du porte-capsule comporte des éléments perforants **13**, mobiles selon une direction verticale. Une fois le fond de la capsule **8** percé par les éléments perforants **13**, un mélange eau-café peut s'écouler à travers le porte-capsule **7** de manière à être récupéré dans une tasse (non-illustrée) disposée sous l'orifice de sortie **10**.

Le dispositif comprend également une conduite de dérivation **5** dont l'extrémité supérieure est branchée sur la conduite d'arrivée d'eau 3, entre la pompe **2** et le corps de chauffe **15**, au moyen d'un raccord en Y **11**: La conduite de dérivation **5** comprend aussi une valve **4** adaptée pour s'ouvrir à partir d'une pression prédéfinie. Enfin, l'extrémité inférieure de la conduite de dérivation **5** est connectée à des moyens hydrauliques d'activation **6**, par exemple un piston, qui, lorsqu'ils sont activés suite à l'ouverture de la valve **4**, entraînent les éléments perforants **13** vers le haut en direction de la capsule **8**.

Le dispositif fonctionne comme suit : Initialement, la valve **4** est fermée et la pompe **2** inactivée. On place une nouvelle capsule **8** sur le porte-capsule **7**, suivi du percement de sa paroi supérieure par l'organe d'injection **9**. De l'eau est ensuite introduite dans la conduite d'arrivée 3 par activation de la pompe **2**. Voir la figure 1 qui représente en noir les portions de conduite occupées par de l'eau consécutivement à l'activation de la pompe **2.**

Lorsque l'eau qui se trouve dans la conduite d'arrivée d'eau **3**, donc dans la capsule **8,** a atteint une pression prédéfinie, la valve **4** s'ouvre de sorte que l'eau s'écoule dans le reste de la conduite de dérivation **2** et active les éléments perforants **13** qui percent la paroi inférieure de la capsule **8** (voir figure 2). Le mélange eau-café contenu dans la capsule **8** s'écoule à travers le porte-capsule **7**, au travers d'orifices (non-illustrés) et est récupéré dans une tasse disposée sous l'orifice de sortie **10**.

Il va de soi que les schémas illustrés sur les figures 1 et 2 ne résument pas toutes les possibilités de réalisation de l'invention. Le porte-capsule n'est pas nécessairement disposé au-dessous de la capsule. A titre d'exemple, on peut prévoir un porte-capsule qui retiendrait la capsule par en-dessus. De même, les éléments perforants peuvent percer la capsule latéralement ou par dessus.

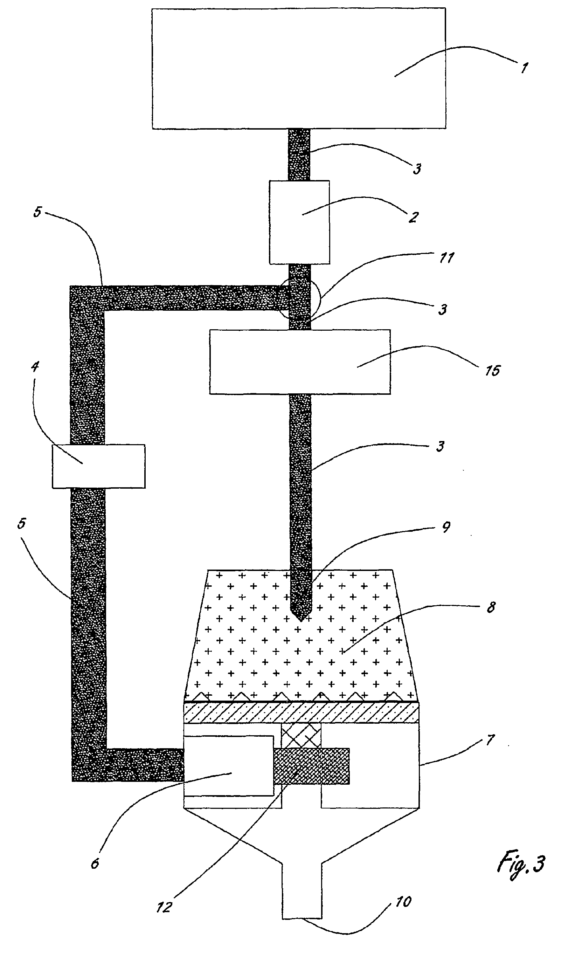

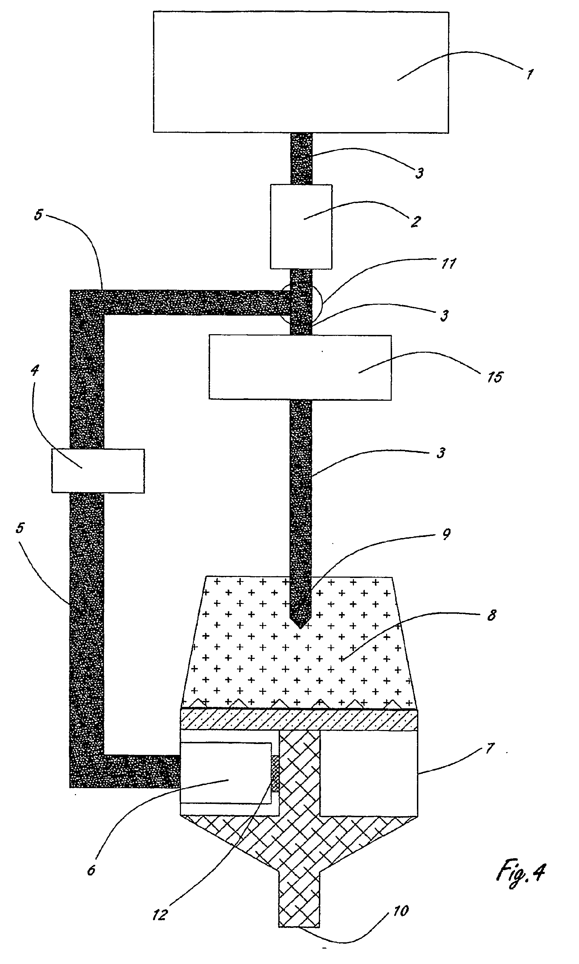

La variante illustrée sur les figures 3 et 4 ne diffère de celle des figures 1 et 2 que par le fait que les éléments perforants sont remplacés par un (voire plusieurs) obturateur **12** qui, lorsqu'il est inactif, bloque le conduit de sortie et, lorsqu'il est actif, le libère. On notera que dans cette variante, la paroi inférieure de la capsule **8** est percée lors de son placement dans le porte-capsule 7, préalablement à l'arrivée de l'eau dans la capsule.

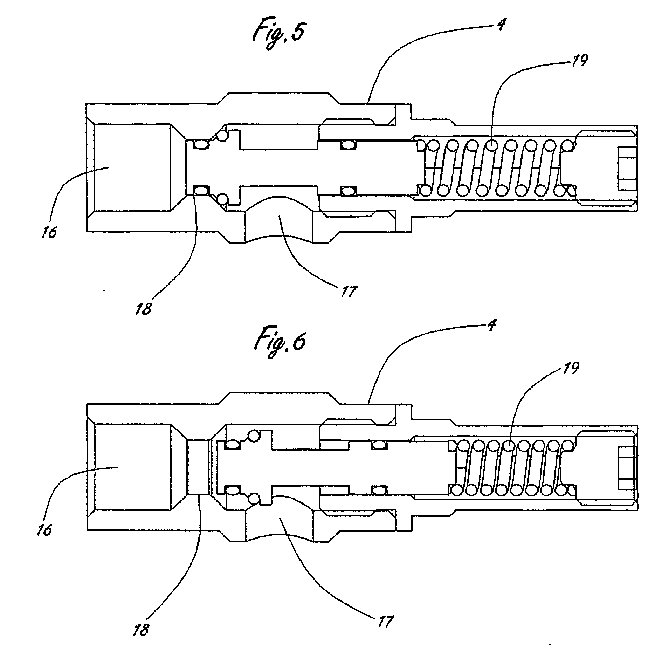

Les figures 5 et 6 représentent une valve **4** pouvant être utilisée avec le dispositif selon l'invention. La valve **4** comprend un orifice d'entrée **16** mis en relation avec la conduite d'arrivée d'eau 3, un orifice de sortie **17** mis en relation avec les moyens hydrauliques **6**,**12**,**13**, les deux orifices étant reliés par une zone de fermeture **18** au travers de laquelle peut se loger un piston obturateur **25**. En position de repos, le piston obturateur est confiné dans la zone de fermeture **18** au moyen d'un ressort **19**. Tant que la force exercée par le ressort **19** sur le piston obturateur est supérieure à la force exercée par la pression régnant dans la conduite d'arrivée d'eau **3**, la valve **4** reste fermée. Lorsque la pression d'eau prédomine, la valve **4** s'ouvre et l'eau sort par l'orifice de sortie **17**.

Avantageusement, la force exercée par le ressort peut être réglée par l'utilisateur du dispositif. En variant la pression du mélange eau-café régnant dans la capsule, l'utilisateur a donc la possibilité de préparer son café selon ses goûts.

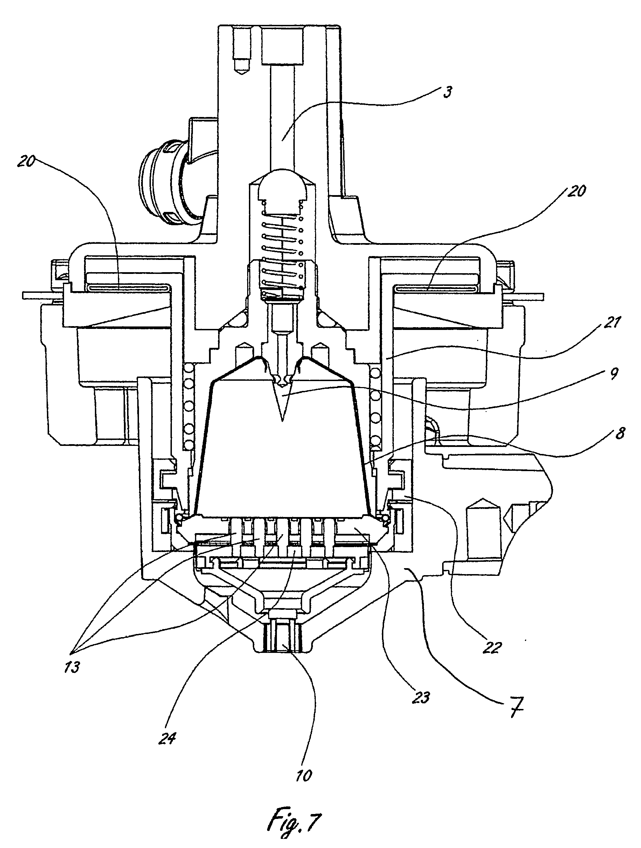

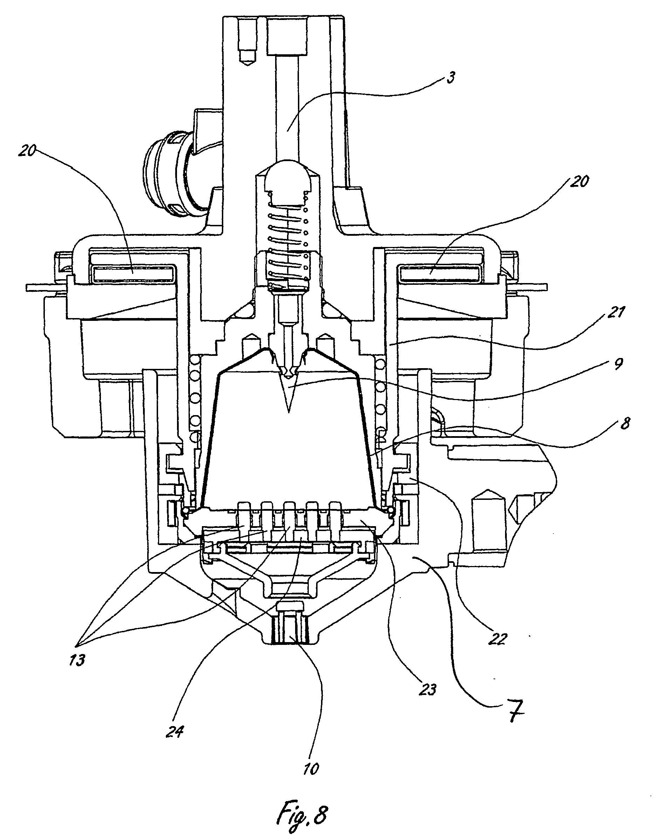

Un mode de réalisation détaillé de la variante des figures 1 et 2 est représenté sur les figures 7 et 8. Les mêmes références numériques sont utilisées.

Le mécanisme d'actionnement des éléments perforants **13** comprend les pièces suivantes : Un réservoir en matière flexible **20,** de forme annulaire, relié à la conduite de dérivation **5** (non-illustrée), un corps annulaire mobile **21** entourant la capsule **8** et dont la partie supérieure repose sur le réservoir **20**, une plaque support **24** d'éléments perforants **13** reliée au corps annulaire **21** par une bague de fixation **22**. Le support **23** du porte-capsule 7 comporte un ensemble d'orifices au travers desquels les éléments perforants peuvent se mouvoir.

Le mécanisme d'actionnement des éléments perforants **13** fonctionne comme suit : En position de repos (figure 7), les éléments perforants sont disposés sous la paroi inférieure de la capsule **8**. En mode actif (figure 8), l'eau pénètre dans le réservoir **20**. Ce dernier se gonfle et entraîne vers le haut le corps annulaire mobile **21** ainsi que l'ensemble qui lui est solidaire, soit la bague de fixation **22**, la plaque support **24** et les éléments perforants **13**. La paroi inférieure de la capsule est alors perforée, ce qui entraîne l'écoulement du mélange eau-café au travers de l'orifice de sortie **10**.

Il va de soi que l'invention ne se limite pas aux exemples décrits précédemment. Par exemple, le raccord en Y peut également se situer entre le corps de chauffe et l'organe d'injection. Avec cette configuration, l'utilisation d'un réservoir flexible tel que décrit plus haut serait particulièrement avantageuse. Celui-ci pourrait être remplacé aisément en cas de formation de calcaire dans le circuit de dérivation.

## Revendications

1. Dispositif pour la préparation d'une boisson à base de café par extraction d'une dose de café moulu contenue dans une capsule (8), ledit dispositif comprenant un réservoir d'eau (1), une pompe (2), un corps de chauffe (15) et un organe d'injection d'eau (9) reliés successivement par une conduite d'arrivée d'eau (3); le dispositif comprenant en outre, disposés dans le prolongement de l'organe d'injection d'eau (9), un porte-capsule (7) et un orifice de sortie (10) pour le mélange eau-café, le porte-capsule (7) étant adapté pour être fixé et retiré manuellement du dispositif et comporte des moyens pour contenir une capsule (8) de café, de manière à ce que de l'eau sous pression en provenance de l'organe d'injection d'eau (9) puisse traverser la capsule (8) et passer à travers l'orifice de sortie (10), ledit dispositif étant **caractérisé en ce qu'**il est en outre constitué d'une seule et unique conduite de dérivation (5), ladite conduite de dérivation (5) étant branchée à l'une de ses extrémités à la conduite d'arrivée d'eau (3), et comporte, à l'autre de ses extrémités, des moyens hydrauliques (6,12,13,20) adaptés pour contrôler l'écoulement d'un mélange eau-café à travers l'orifice de sortie (10); le dispositif comprenant en outre une valve (4) disposée sur la conduite de dérivation (5), ladite valve (4) étant adaptée pour être soit ouverte et autoriser un écoulement de l'eau dans la conduite de dérivation (5) lorsqu'une pression prédéfinie est atteinte, soit fermée et bloquer tout écoulement dans la conduite de dérivation (5) lorsque ladite pression prédéfinie n'est pas encore atteinte.

2. Dispositif selon la revendication précédente comprenant des moyens de réglage, par un utilisateur, de ladite pression prédéfinie.

3. Dispositif selon la revendication 1 ou 2 **caractérisé en ce que** la valve (4) est sensible à la pression.

4. Dispositif selon l'une quelconque des revendications 1 à 3 **caractérisé en ce que** les moyens hydrauliques (6,12) comprennent un obturateur (12) qui alternativement bloque ou autorise l'écoulement d'un mélange eau-café à travers l'orifice de sortie (10).

5. Dispositif selon la revendication précédente **caractérisé en ce que** le porte-capsule (7) comporte au moins un orifice d'écoulement (14) et que les moyens hydrauliques (6,12) sont disposés de manière à pouvoir obturer ledit orifice (14).

6. Dispositif selon l'une quelconque des revendications 1 à 3 **caractérisé en ce que** les moyens hydrauliques (6,13) sont constitués d'au moins un organe de perforation (13) qui, lorsqu'il est activé, perfore une capsule (8) disposée sur le porte capsule (7) et autorise de la sorte l'écoulement d'un mélange eau-café à travers l'orifice de sortie (10).

7. Dispositif selon l'une quelconque des revendications précédentes **caractérisé en ce que** les moyens hydrauliques comprennent un réservoir flexible (20) qui, lorsqu'il se gonfle consécutivement à l'arrivée d'eau, entraîne des moyens (21,22,24,12,13) qui autorisent l'écoulement d'un mélange eau-café à travers l'orifice de sortie (10).

## Claims

1. Device for the preparation of a coffee-based drink by extracting a dose of ground coffee contained in a capsule (8), said device comprising a water tank (1), a pump (2), a heater body (15) and a water injection member (9) connected successively via a water inlet pipe (3); the device also comprising, disposed in the extension of the water injection member (9), a capsule-carrier (7) and an outlet orifice (10) for the water-coffee mixture, the capsule-carrier (7) being suitable for being manually attached to and removed from the device and comprising means for containing a capsule (8) of coffee, so that the pressurized water originating from the water injection member (9) can pass through the capsule (8) and pass through the outlet orifice (10), said device being **characterized in that** it also consists of a single branch pipe (5), said branch pipe (5) being connected at one of its ends to the water inlet pipe (3), and comprises, at the other of its ends, hydraulic means (6, 12, 13, 20) suitable for controlling the outflow of a water-coffee mixture through the outlet orifice (10); the device also comprising a valve (4) placed on the branch pipe (5), said valve (4) being suitable either to be open and allow the water to flow into the branch pipe (5) when a preset pressure is reached, or closed and close off any flow in the branch pipe (5) when said preset pressure is not yet reached.

2. Device according to the preceding claim, comprising means of adjustment, by a user, of said preset pressure.

3. Device according to Claim 1 or 2, **characterized in that** the valve (4) is pressure-sensitive.

4. Device according to any one of Claims 1 to 3, **characterized in that** the hydraulic means (6, 12) comprise a stopper (12) which alternatively closes off or releases the flow of a water-coffee mixture through the outlet orifice (10).

5. Device according to the preceding claim, **characterized in that** the capsule-carrier (7) comprises at least one outflow orifice (14) and that the hydraulic means (6, 12) are placed so as to be able to close off said orifice (14).

6. Device according to any one of Claims 1 to 3, **characterized in that** the hydraulic means (6, 13) consist of at least one perforation member (13) which, when it is activated, perforates a capsule (8) placed on the capsule-carrier (7) and thereby allows a water-coffee mixture to flow through the outlet orifice (10).

7. Device according to any one of the preceding claims, **characterized in that** the hydraulic means comprise a flexible reservoir (20) which, when it swells following the arrival of water, operates means (21, 22, 24, 12, 13) which release the outflow of a water-coffee mixture through the outlet orifice (10).

## Patentansprüche

1. Vorrichtung zur Zubereitung eines Kaffeegetränks durch Extraktion einer in einer Kapsel (8) enthaltenen Dosis von gemahlenem Kaffee, wobei die Vorrichtung einen Wassertank (1), eine Pumpe (2), einen Heizkörper (15) und ein Wassereinspritzorgan (9) aufweist, die nacheinander von einer Wasserzufuhrleitung (3) verbunden werden; wobei die Vorrichtung außerdem, in der Verlängerung des Wassereinspritzorgans (9) angeordnet, einen Kapselträger (7) und eine Austrittsöffnung (10) für die Wasser-Kaffee-Mischung aufweist, wobei der Kapselträger (7) geeignet ist, um manuell befestigt und aus der Vorrichtung entfernt zu werden und Mittel aufweist, um eine Kaffeekapsel (8) zu enthalten, damit das vom Wassereinspritzorgan (9) kommende Druckwasser die Kapsel (8) durchqueren und durch die Austrittsöffnung (10) gehen kann, wobei die Vorrichtung **dadurch gekennzeichnet ist, dass** sie außerdem aus einer einzigen Abzweigleitung (5) besteht, wobei die Abzweigleitung (5) an einem ihrer Enden an die Wasserzufuhrleitung (3) angeschlossen ist und an ihrem anderen Ende hydraulische Mittel (6, 12, 13, 20) aufweist, die geeignet sind, um das Fließen einer Wasser-Kaffee-Mischung durch die Austrittsöffnung (10) zu steuern; wobei die Vorrichtung außerdem ein Ventil (4) aufweist, das auf der Abzweigleitung (5) angeordnet ist, wobei das Ventil (4) geeignet ist, um entweder offen zu sein und ein Fließen des Wassers in der Abzweigleitung (5) zu erlauben, wenn ein vordefinierter Druck erreicht ist, oder geschlossen zu sein und jedes Fließen in der Abzweigleitung (5) zu verhindern, wenn der vordefinierte Druck noch nicht erreicht ist.

2. Vorrichtung nach dem vorhergehenden Anspruch, die Mittel zur Regelung des vordefinierten Drucks durch einen Benutzer aufweist.

3. Vorrichtung nach Anspruch 1 oder 2, **dadurch gekennzeichnet, dass** das Ventil (4) auf Druck anspricht.

4. Vorrichtung nach einem der Ansprüche 1 bis 3, **dadurch gekennzeichnet, dass** die hydraulischen Mittel (6, 12) einen Verschluss (12) aufweisen, der das Fließen einer Wasser-Kaffee-Mischung durch die Austrittsöffnung (10) abwechselnd zulässt oder verhindert.

5. Vorrichtung nach dem vorhergehenden Anspruch, **dadurch gekennzeichnet, dass** der Kapselträger (7) mindestens eine Durchflussöffnung (14) aufweist, und dass die hydraulischen Mittel (6, 12) so angeordnet sind, dass sie die Öffnung (14) verschließen können.

6. Vorrichtung nach einem der Ansprüche 1 bis 3, **dadurch gekennzeichnet, dass** die hydraulischen Mittel (6, 13) aus mindestens einem Durchlöcherungsorgan (13) bestehen, das, wenn es aktiviert wird, eine auf dem Kapselträger (7) angeordnete Kapsel (8) durchlöchert und auf diese Weise das Fließen einer Wasser-Kaffee-Mischung durch die Austrittsöffnung (10) erlaubt.

7. Vorrichtung nach einem der vorhergehenden Ansprüche, **dadurch gekennzeichnet, dass** die hydraulischen Mittel einen elastischen Tank (20) aufweisen, der, wenn er sich nach der Zufuhr von Wasser ausdehnt, Mittel (21, 22, 24, 12, 13) antreibt, die das Fließen einer Wasser-Kaffee-Mischung durch die Austrittsöffnung (10) erlauben.
